# EUROPÄISCHE PATENTSCHRIFT

(11) **EP 1 989 088 B1**
(45) Veröffentlichungstag und Bekanntmachung des Hinweises auf die Patenterteilung: **07.07.2010**
(21) Anmeldenummer: 07704577.1
(22) Anmeldetag: 14.02.2007
(51) Int. Cl.: B60T 8/40, B60T 7/04, B60T 13/66

(54) **VERFAHREN ZUM BETREIBEN EINER KRAFTFAHRZEUGBREMSANLAGE**
METHOD FOR OPERATING A MOTOR VEHICLE BRAKE SYSTEM
PROCEDE DE GESTION D'UN SYSTÈME DE FREINAGE POUR VÉHICULE AUTOMOBILE

(30) Priorität: 23.02.2006 DE 102006008956; 19.12.2006 DE 102006059949
(43) Veröffentlichungstag der Anmeldung: 12.11.2008
(73) Patentinhaber: Continental Teves AG & Co. oHG, 60488 Frankfurt (DE)
(72) Erfinder: FEICK, Stefan, 67292 Kirchheimbolanden (DE); ULLRICH, Thorsten, 64579 Gernsheim (DE); PAGEL, Klaus Dieter, 64293 Darmstadt (DE)
(86) Internationale Anmeldenummer: PCT/EP2007/051440
(87) Internationale Veröffentlichungsnummer: WO 2007/096284

(56) Entgegenhaltungen:
- WO-A-2005/032896
- WO-A-2006/084864
- DE-A1-102004 011 622
- DE-A1-102005 025 304

## Beschreibung

Die Erfindung betrifft ein Verfahren zum Betreiben einer Kraftfahrzeugbremsanlage vom Typ "Brake-by-wire", die aufweist:
a) einen Bremskraftverstärker, der sowohl mittels eines mit einem Bremspedal in eine kraftübertragende Verbindung bringbaren Eingangsglieds als auch mittels einer elektronischen Steuereinheit betätigbar ist, wobei zwischen dem Bremspedal und dem Bremskraftverstärker ein Abstand vorgesehen ist, der in der Betriebsart "Brake-by-wire" eine Entkopplung einer kraftübertragenden Verbindung zwischen Bremspedal und Bremskraftverstärker ermöglicht,
b) einen dem Bremskraftverstärker nachgeschalteten Hauptbremszylinder,
c) Mittel zum Erfassen des Betätigungsweges des Bremspedals,
d) einen mit dem Bremspedal zusammenwirkenden Pedalwegsimulator, durch den in der Betriebsart "Brake-by-wire" eine auf das Bremspedal wirkende Rückstellkraft unabhängig von einer Betätigung des Bremskraftverstärkers simulierbar ist, sowie
e) eine Zu- bzw. Abschalteinrichtung, die den Pedalwegsimulator in der Betriebsart "Brake-by-wire" bei der Entkopplung der kraftübertragenden Verbindung zwischen dem Bremspedal und dem Bremskraftverstärker zu- und außerhalb der Betriebsart "Brake-by-wire" abschaltet.

Eine derartige Bremsanlage ist z. B. aus der deutschen Patentanmeldung der Anmelderin DE 10 2004 011 622 A1 bekannt. Die oben erwähnte Zu- und Abschalteinrichtung wird bei einer Ausführung der vorbekannten Bremsanlage durch eine hydraulische Zylinder-Kolben-Anordnung gebildet, deren Druckraum mittels einer absperrbaren Verbindung mit einem Druckmittelvolumen-Aufnahmeelement verbunden ist und an deren Kolben sich ein Simulatorgehäuse abstützt. Das Absperren der Verbindung zwischen dem Druckraum und dem als Niederdruckspeicher ausgebildeten Druckmittelvolumen-Aufnahmeelement erfolgt mittels eines elektromagnetisch betätigbaren Absperrventils, das als stromlos offenes Schaltventil ausgeführt ist. Bei einer Überprüfung der Zu- und Abschalteinrichtung wird der erwähnte Kolben bewegt, wobei der im hydraulischen Druckraum steigende Druck gemessen und das entsprechende Drucksignal ausgewertet wird. Die Überprüfung kann im Stillstand bei einer ersten Betätigung des Bremspedals nach Einschalten der Zündung durchgeführt werden. Dieser Zustand kann als "konventioneller Modus" bezeichnet werden. Nach Beenden der Überprüfung wird in den eigentlichen "By-wire-Modus" umgeschaltet, wobei die Umschaltung erfolgt, sobald ein vollständig gelöstes Bremspedal erkannt wird. Das dem Fahrzeugführer im "konventionellen Modus" vermittelte Bremspedalgefühl ist deutlich unterschiedlich zu dem im "By-wire-Modus".

Es ist daher Aufgabe der vorliegenden Erfindung, geeignete Maßnahmen vorzuschlagen, die ein Überblenden vom "konventionellen Modus" in den "By-wire-Modus" und somit eine Anpassung des Bremspedalgefühls der jeweiligen Situation ermöglichen.

Diese Aufgabe wird erfindungsgemäß dadurch gelöst, dass der bei einer Betätigung des Bremspedals zurück gelegte Weg ermittelt und anschließend durch den Fahrzeugführer reduziert wird und dass bei einer Verringerung des Betätigungsweges um einen vorgegebenen Wert oder bei einer erkannten Fahrzeugbewegung oder einem positiven Ergebnis einer im Hintergrund laufenden Überwachungsfunktion der Zu- und Abschalteinrichtung die Zu- und Abschalteinrichtung aktiviert und der Bremskraftverstärker durch die elektronische Steuereinheit angesteuert wird.

Zur Konkretisierung des Erfindungsgedankens ist bei einer vorteilhaften Weiterbildung des vorgeschlagenen Verfahrens vorgesehen, dass die Zu- und Abschalteinrichtung als eine hydraulische Zylinder-Kolben-Anordnung ausgebildet ist, dessen Kolben, an dem sich ein Gehäuse des Pedalwegsimulators abstützt, einen Druckraum begrenzt, der über eine Verbindung, die mittels eines Absperrventils absperrbar ist, mit einem Druckmittelvolumen-Aufnahmeelement verbindbar ist, und dass die Aktivierung der Zu- und Abschalteinrichtung durch ein Umschalten des Absperrventils in seine geschlossene Schaltstellung erfolgt.

Dabei ist es besonders vorteilhaft, wenn der Sollwert des durch die Ansteuerung des Bremskraftverstärkers im Hauptbremszylinder eingesteuerten hydraulischen Druckes einer Kennlinie entnommen wird, die einem Betätigungsweg des Bremspedals einen Druckwert zuordnet und die gegenüber einer nominalen Kennlinie (entlang der Achse, auf der Betätigungswegwerte aufgetragen werden), um einen Wert verschoben ist, der dem geringsten Betätigungsweg seit der Aktivierung der Zu- und Abschalteinrichtung und der Ansteuerung des Bremskraftverstärkers abzüglich eines Korrekturwertes entspricht.

Weitere Merkmale des erfindungsgemäßen Verfahrens sind in den Unteransprüchen 4 bis 8 aufgeführt.

Das erfindungsgemäße Verfahren wird in der nachfolgenden Beschreibung unter Bezugnahme auf die beiliegende Zeichnung näher erläutert. In der Zeichnung zeigen:
Fig. 1 eine Darstellung der Bremsanlage, bei der das erfindungsgemäße Verfahren angewendet werden kann,
Fig. 2 eine Ausführung der bei der Bremsanlage nach Fig. 1 verwendeten Bremsbetätigungseinheit in Teilschnittdarstellung,
Fig. 3a, b graphische Darstellungen der zeitlichen Verläufe des Bremspedalbetätigungsweges, und
Fig. 4 Kennlinien, die bestimmten Bremspedalbetätigungswegen Werte des im Hauptbremszylinder eingesteuerten hydraulischen Druckes zuordnen.

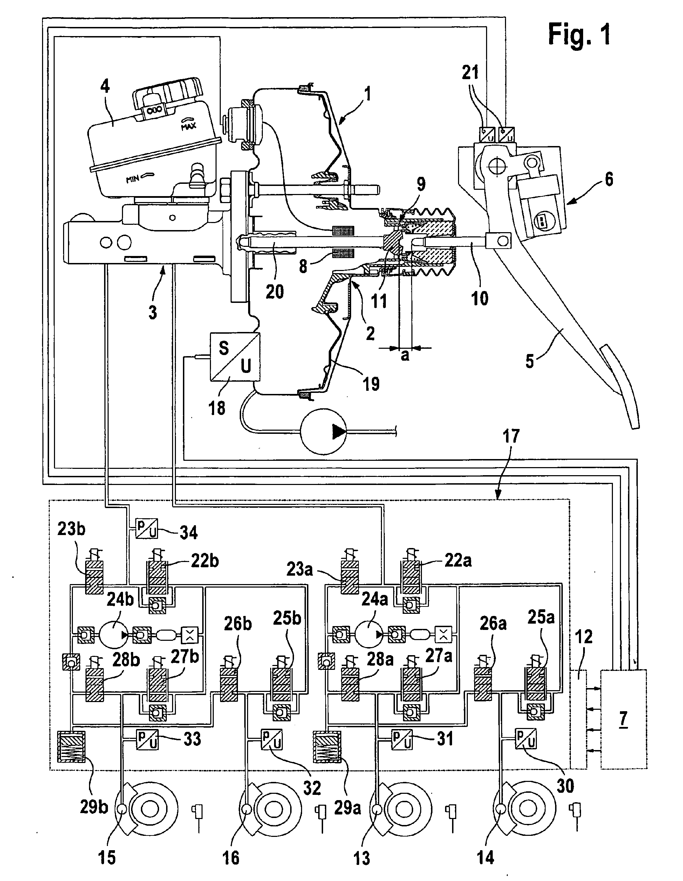

Die in Fig. 1 der Zeichnung gezeigte Kraftfahrzeugbremsanlage, die vorzugsweise in der Betriebsart "Brake-by-wire" betrieben werden kann, besteht im Wesentlichen aus einer Betätigungseinheit 1, einer hydraulischen Steuer- und Regeleinheit (HCU) 17, an die hydraulische Steuer- und Regeleinheit (HCU) 17 angeschlossene Fahrzeugradbremsen 13, 14, 15, 16, einer der Betätigungseinheit 1 zugeordnete erste elektronische Steuer- und Regeleinheit 7 sowie einer der hydraulischen Steuer- und Regeleinheit (HCU) 17 zugeordnete zweite elektronische Steuer- und Regeleinheit 12. Die Betätigungseinheit 1 besteht ihrerseits aus einem Bremskraftverstärker, vorzugsweise einem Unterdruckbremskraftverstärker 2, einem dem Bremskraftverstärker 2 nachgeschalteten Hauptbremszylinder, vorzugsweise einem Tandemhauptzylinder 3, an dessen nicht dargestellte Druckräume unter Zwischenschaltung der hydraulischen Steuer- und Regeleinheit 17 die vorhin genannten Radbremsen 13, 14, 15, 16 angeschlossen sind, sowie einem dem Hauptbremszylinder 3 zugeordneten Druckmittelvorratsbehälter 4. Der Betätigung des Bremskraftverstärkers 2 durch den Fahrer dient ein Bremspedal 5, wobei ein mit dem Bremspedal 5 insbesondere in der Betriebsart "Brake-by-wire" zusammenwirkender Pedalwegsimulator 6 vorgesehen ist, der dem Fahrer das gewöhnliche Bremspedalgefühl vermittelt. Ein Fahrerverzögerungswunsch bzw. der Betätigungsweg des Bremspedals 5 wird mittels mindestens einer Sensoreinrichtung 21 erfasst, deren Signale der vorhin erwähnten ersten elektronischen Steuereinheit 7 zugeführt werden. Durch die Ausgangssignale der ersten elektronischen Steuereinheit 7 ist u. a. ein dem Bremskraftverstärker 2 zugeordneter Elektromagnet 8 ansteuerbar, der eine vom Fahrerwillen unabhängige Betätigung eines pneumatischen Steuerventils 9 ermöglicht, das eine Luftzufuhr zum Bremskraftverstärker 2 steuert. Wie in der nachfolgenden Beschreibung ausführlich erläutert wird, enthält die erste elektronische Steuer- und Regeleinheit 7 eine Regelschaltung zur Regelung einer charakteristischen Größe des Bremskraftverstärkers 3, vorzugsweise des von einem Ausgangsglied 20 des Bremskraftverstärkers 2 zurück gelegten Weges und/oder zur Regelung des im System herrschenden hydraulischen Druckes.

Ein zwischen dem Ende eines mit dem Bremspedal 5 gekoppelten Eingangsglieds (Kolbenstange) 10 und einem Ventilkolben 11 des vorhin genannten Steuerventils 9 vorgesehener axialer Spalt bzw. Abstand "a" gewährleistet in der Betriebsart "Brake-by-wire" eine Entkopplung der kraftübertragenden Verbindung zwischen dem Bremspedal 5 und dem Bremskraftverstärker 2. Ein Wegsensor 18 dient der Erfassung des Weges einer die Verstärkungskraft des Bremskraftverstärkers 2 aufbringenden beweglichen Wand 19 bzw. des Weges des oben erwähnten Ausgangsglieds 20 des Bremskraftverstärkers 2, das seine Ausgangskraft auf einen nicht dargestellten ersten Kolben des Hauptbremszylinders 3 überträgt. Außerdem ist in der hydraulischen Regeleinheit 17 ein Drucksensor 34 integriert, der den im System herrschenden hydraulischen Eingangsdruck erfasst.

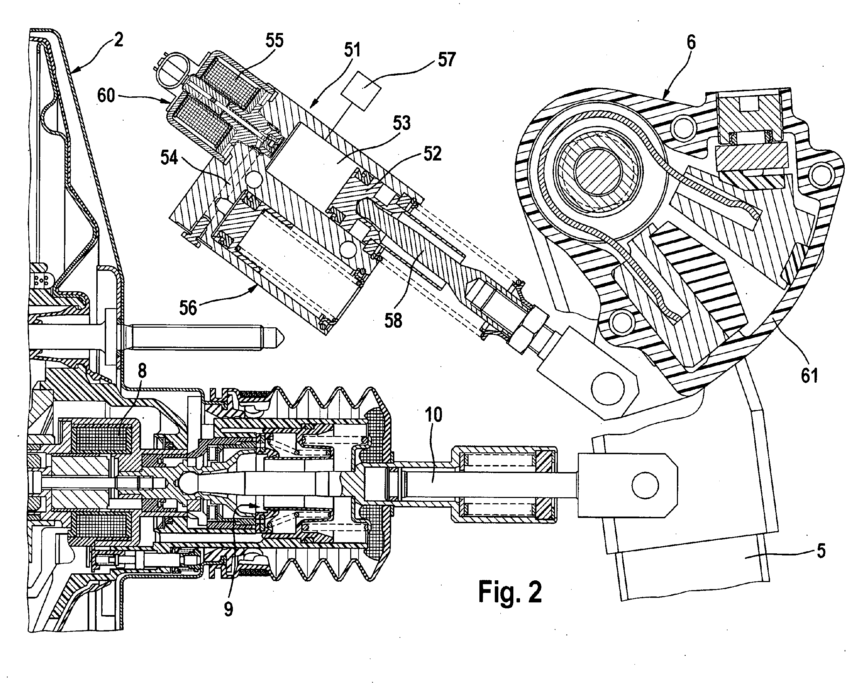

Der Pedalwegsimulator 6, durch den, wie bereits erwähnt, in der Betriebsart "Brake-by-wire" eine auf das Bremspedal 5 wirkende Rückstellkraft unabhängig von einer Betätigung des Bremskraftverstärkers 2 simulierbar ist, ist derart ausgeführt, dass er mittels einer in Fig. 2 im axialen Schnitt dargestellten Zu- und Abschalteinrichtung 60 in der Betriebsart "Brake-by-wire" bei der Entkopplung der kraftübertragenden Verbindung zwischen dem Bremspedal 5 und dem Bremskraftverstärker 2 zuschaltbar und außerhalb der Betriebsart "Brake-by-wire" abschaltbar ist.

Außerdem ist der Zeichnung zu entnehmen, dass die hydraulische Steuer- und Regeleinheit (HCU) 17 sämtliche hydraulischen sowie elektrohydraulischen Komponenten aufweist, die zur Durchführung von Bremsdruckregelvorgängen wie ABS, ASR, ESP... erforderlich sind. Dazu gehören pro Bremskreis: jeweils ein Trennventil 22a, b, ein elektrisches Umschaltventil 23a, b, eine hydraulische Pumpe 24a, b, jeweils zwei elektrisch ansteuerbare Druckregelventile bzw. Einlass- und Auslassventile 25a, b, 26a, b, 27a, b und 28a, b zur selektiven Einstellung des Bremsdruckes an den Radbremsen 13 - 16, jeweils ein Niederdruckspeicher 29a, b sowie den Radbremsen 13 - 16 zugeordnete Drucksensoren 30 - 33.

Der Aufbau der vorhin erwähnten Bremsbetätigungseinheit 1 ist aus der in der Beschreibungseinleitung genannten DE 10 2004 011 622 A1 bekannt. Deshalb ist in Fig.2 in einer Teilschnittdarstellung lediglich die Steuergruppe des Unterdruckbremskraftverstärkers 2 detailliert dargestellt. Der mit dem Bremspedal 5 insbesondere in der Betriebsart "Brake-by-wire" zusammenwirkende Pedalwegsimulator 6, der dem Fahrer das gewöhnliche Bremspedalgefühl vermittelt und der sich bei dem gezeigten Ausführungsbeispiel außerhalb des Kraftflusses zwischen dem Bremspedal 5 und dem Bremskraftverstärker 2 befindet, wirkt mit einer elektrohydraulischen Zu- und Abschaltvorrichtung 60 zusammen, die den Pedalwegsimulator 6 außerhalb der Betriebsart "Brake-by-wire" abschaltet.

Die Zu- und Abschaltvorrichtung 60 weist im Wesentlichen eine Kolben-Zylinder-Anordnung 51 sowie ein hydraulisches Druckmittel-Aufnahmeelement 56 auf. Der Kolben 52 der Kolben-Zylinder-Anordnung 51 steht mittels einer Betätigungsstange 58 in kraftübertragender Verbindung mit einem Gehäuse 61 des Pedalwegsimulators 6 und begrenzt einen Druckraum 53, der mittels einer mit gestrichelten Linien dargestellten gezeigten hydraulischen Verbindung 54 an das Druckmittel-Aufnahmeelement 56 angeschlossen ist, das im gezeigten Beispiel als ein Niederdruckspeicher ausgebildet ist. In der hydraulischen Verbindung 54 ist ein elektromagnetisch betätigbares Absperrventil 55 eingefügt, das ein Absperren der erwähnten Verbindung 54 ermöglicht. Der hydraulische Druck im Druckraum 53 der Kolben-Zylinder-Anordnung 51 kann mittels eines Drucksensors 57 ermittelt werden. Bei dem zuerst geöffneten Absperrventil 55 muss der gemessene Druckwert nahezu = 0 sein, während beim Umschalten des Absperrventils 55 in seine Schließstellung ein sprunghafter Druckanstieg erfolgen muss. Damit ist bewiesen, dass sich der Kolben 52 vor dem Schließen des Absperrventils 55 bewegt hat, dass das Absperrventil 55 ausreichend dicht ist und dass der Drucksensor 57 funktioniert.

Die Verwendung eines Drucksensors 57 bietet insbesondere bei der Durchführung eines Pre- oder Postdrive-Checks den Vorteil, dass das Drucksensorsignal zusätzlich als Plausibilisierung des von einem dem Bremspedal zugeordneten Pedalwegsensor erzeugten Signals verwendet werden kann. Mittels des Drucksensors können dann gewisse Fehlerzustände des Systems, wie beispielsweise eine Fehlererfassung des Bremspedalweges, detektiert und damit Rückfallebenen aktiviert werden.

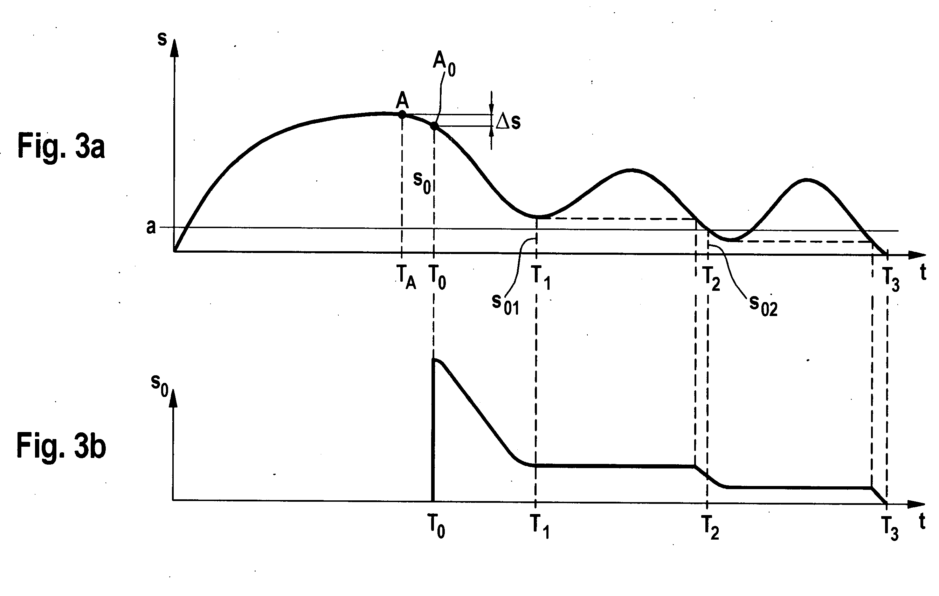

Wie bereits oben erwähnt wurde, zeigen die Darstellungen gemäß Fig. 3a und 3b zeitliche Verläufe des Bremspedalbetätigungsweges s und der Größe s₀, die dem geringsten Betätigungsweg seit der Aktivierung der Zu- und Abschalteinrichtung 60 und der Ansteuerung des Bremskraftverstärkers 2 entspricht. Der Punkt A entspricht dem bei einer Betätigung des Bremspedals 5 maximal erreichten Betätigungsweg, während der Kurvenabschnitt A bis A₀ einer Zurücknahme der auf das Bremspedal 5 einwirkenden Betätigungskraft entspricht, die eine Verringerung des Betätigungsweges S_{A} um einen vorgegebenen Wert Δs auf den Wert s₀ zur Folge hat. Im Zeitabschnitt 0 bis T₀ erfolgt die Betätigung im eingangs erwähnten "konventionellen" Modus. Zum Zeitpunkt T₀ wird die Zu- und Abschalteinrichtung 60 des Pedalwegsimulators 6 aktiviert und der Bremskraftverstärker 2 wird durch die elektronische Steuereinheit 7 angesteuert, so dass die Betätigungseinheit anschließend im Zeitintervall T₀ bis T₂ in einer Mischform aus dem "konventionellen" und dem "By-wire"-Modus betrieben wird. Zu dem zwischen den Punkten T₀ und T₂ dazwischen liegenden Zeitpunkt T₁ erfolgt ein erneutes Betätigen bzw. ein Nachtreten des Bremspedals 5 durch den Fahrzeugführer, wobei vor dem Nachtreten ein Wert s₀₁ erreicht wird, der als der geringste Betätigungsweg seit der Aktivierung der Zu- und Abschalteinrichtung 60 und der Ansteuerung des Bremskraftverstärkers 2 berücksichtigt wird. Zum Zeitpunkt T₂ entspricht der Wert s₀₂ dem der Entkopplung der Kraftübertragung zwischen dem Bremspedal 5 und dem Bremskraftverstärker 2 dienenden Abstand "a". Die vorhin erwähnte Mischform ist beendet und das Bremssystem befindet sich voll im "By-wire"-Modus. Zum Zeitpunkt T3 wird das Bremspedal 5 vollständig gelöst und die Betätigung des Bremssystems wird beendet.

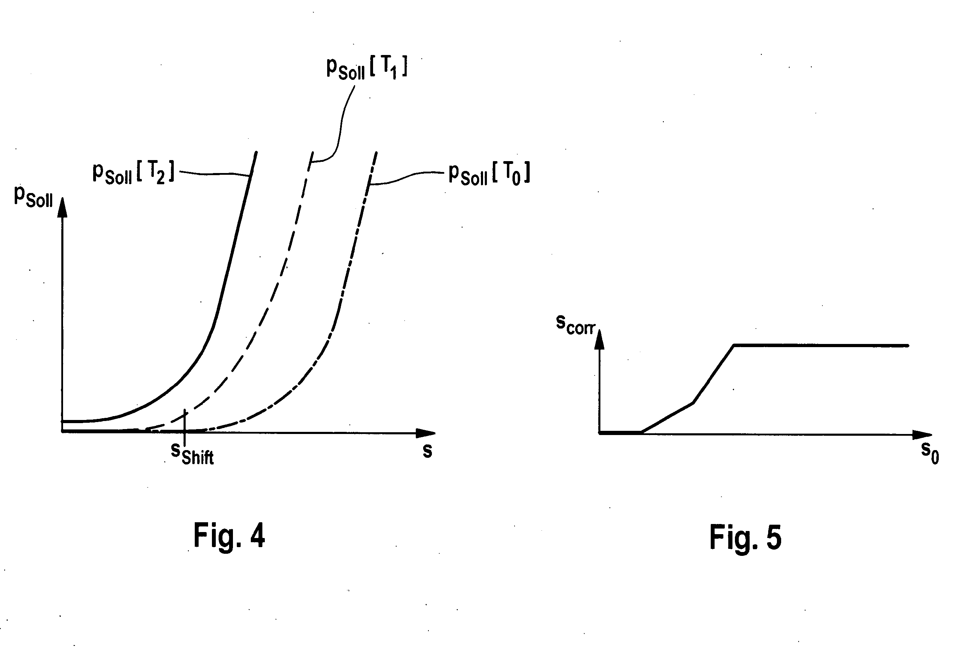

Fig. 4 zeigt schließlich die Auswirkung der oben erläuterten Maßnahmen auf die Kennlinien, die die Abhängigkeit des Sollwerts p_{Soll} des im Hauptbremszylinder 3 eingesteuerten hydraulischen Druckes vom Bremspedalbetätigungsweg s darstellen. Während die Kennlinie p_{Soll}[T₂] die nominale Kennlinie darstellt, entsprechen die Kennlinien p_{Soll}[T₀] und p_{Soll}[T₁] dem vorhin erläuterten Verhalten des Systems zu den Zeitpunkten T₀ und T₁. Dabei ist Fig. 4 zu entnehmen, dass die dem "ersten" geringsten Betätigungswegwert s₀ entsprechende Kennlinie entlang der Abszisse um einen vorgegebenen Wert s_{Shift} verschoben ist. Durch Festlegen weiterer Betätigungswegwerte s₀ (s. Kennlinie p_{Soll}[T₁]) werden Kennlinien erhalten, die sich in Richtung der nominalen Kennlinie bewegen. Der vorgegebene Wert s_{Shift} wird nach der Formel s_{Shift} = s₀ - k * s_{corr} berechnet, in der mit s_{corr} ein vom Wert s₀ abhängiger Korrekturwert bezeichnet wird. Die Abhängigkeit des Korrekturwertes s_{corr} vom Wert s₀ ist in Fig. 5 dargestellt. Der Faktor k, der im einfachsten Fall die Werte 0 oder 1 annehmen kann, ergibt sich aus einer Bewertung der Fahrsituation. Praktikabel ist beispielsweise eine Umschaltung von 0 auf 1 bei erkannter schnellen Pedalvorwärtsbewegung oberhalb eines Schwellwertes.

## Patentansprüche

1. Verfahren zum Betreiben einer Kraftfahrzeugbremsanlage vom Typ "Brake-by-wire", die aufweist:
a) einen Bremskraftverstärker (2), der sowohl mittels eines mit einem Bremspedal (5) in eine kraftübertragende Verbindung bringbaren Eingangsglieds (10) als auch mittels einer elektronischen Steuereinheit (7) betätigbar ist, wobei zwischen dem Bremspedal (5) und dem Bremskraftverstärker (2) ein Abstand (a) vorgesehen ist, der in der Betriebsart "Brake-by-wire" eine Entkopplung einer kraftübertragenden Verbindung zwischen Bremspedal (5) und Bremskraftverstärker (2) ermöglicht,
b) einen dem Bremskraftverstärker (2) nachgeschalteten Hauptbremszylinder (3),
c) Mittel (21) zum Erfassen des Betätigungsweges des Bremspedals (5),
d) einen mit dem Bremspedal (5) zusammenwirkenden Pedalwegsimulator (6), durch den in der Betriebsart "Brake-by-wire" eine auf das Bremspedal (5) wirkende Rückstellkraft unabhängig von einer Betätigung des Bremskraftverstärkers (2) simulierbar ist, sowie
e) eine Zu- bzw. Abschalteinrichtung (60), die im aktivierten Zustand den Pedalwegsimulator (6) in der Betriebsart "Brake-by-wire" bei der Entkopplung der kraftübertragenden Verbindung zwischen dem Bremspedal (5) und dem Bremskraftverstärker (2) zu- und im inaktiven Zustand außerhalb der Betriebsart "Brake-by-wire" abschaltet,
**dadurch gekennzeichnet, dass** der bei einer Betätigung des Bremspedals (5) zurück gelegte Weg ermittelt und anschließend durch den Fahrzeugführer reduziert wird und dass bei einer Verringerung des Betätigungsweges (s) um einen vorgegebenen Wert (Δs) oder bei einer erkannten Fahrzeugbewegung oder einem positiven Ergebnis einer im Hintergrund laufenden Überwachungsfunktion der Zu- und Abschalteinrichtung (60) die Zu- und Abschalteinrichtung (60) aktiviert und der Bremskraftverstärker (2) durch die elektronische Steuereinheit (7) angesteuert wird.

2. Verfahren nach Anspruch 1 **dadurch gekennzeichnet, dass** die Zu- und Abschalteinrichtung (60) eine hydraulische Zylinder-Kolben-Anordnung (51) sowie ein Druckmittelvolumen-Aufnahmeelement (56) aufweist, wobei der Kolben (52) der Zylinder-Kolben-Anordnung (51), an dem sich ein Gehäuse (61) des Pedalwegsimulators (6) abstützt, einen Druckraum (53) begrenzt, der über eine Verbindung (54), die mittels eines Absperrventils (55) absperrbar ist, mit dem Druckmittelvolumen-Aufnahmeelement (56) verbindbar ist, und dass die Aktivierung der Zu- und Abschalteinrichtung (60) durch ein Umschalten des Absperrventils (55) in seine geschlossene Schaltstellung erfolgt.

3. Verfahren nach Anspruch 1 oder 2, **dadurch gekennzeichnet, dass** der Sollwert (P_{Soll}) des durch die Ansteuerung des Bremskraftverstärkers (2) im Hauptbremszylinder (3) eingesteuerten hydraulischen Druckes (p) einer Kennlinie (P_{Soll} = f(s)) entnommen wird, die einem Betätigungsweg (s) des Bremspedals (5) einen Druckwert (p) zuordnet und die gegenüber einer nominalen Kennlinie (p = f(s)) um einen Wert (s_{shift}) verschoben ist und/oder durch Maßgabe durch den Wert (s_{shift}) geeignet skaliert wird, der dem geringsten Betätigungsweg (s₀) seit der Aktivierung der Zu- und Abschalteinrichtung (60) und der Ansteuerung des Bremskraftverstärkers (2) abzüglich eines Korrekturwertes (s_{corr}) entspricht.

4. Verfahren nach Anspruch 3, **dadurch gekennzeichnet, dass** die nominale Kennlinie (P_{Soll} = f(s)) den Zusammenhang zwischen dem Betätigungsweg (s) des Bremspedals (5) und dem Sollwert des im Hauptbremszylinder (3) eingesteuerten Druckes darstellt.

5. Verfahren nach Anspruch 3 oder 4, **dadurch gekennzeichnet, dass** der Korrekturwert (s_{corr}) abhängig vom geringsten Betätigungsweg (s₀) seit der Aktivierung der Zu- und Abschalteinrichtung (60) und der Ansteuerung des Bremskraftverstärkers (2) ist.

6. Verfahren nach Anspruch 5, **dadurch gekennzeichnet, dass** fahrsituationsabhängig zwischen mehreren Kennlinien (s_{corr}) umgeschaltet werden kann.

7. Verfahren nach Anspruch 5 oder 6, **dadurch gekennzeichnet, dass** der Korrekturwert (s_{corr}) in Form einer Kennlinie in der elektronischen Steuereinheit (7) gespeichert ist.

8. Verfahren nach einem der Ansprüche 1 bis 7 **dadurch gekennzeichnet, dass** das Verfahren bei jedem systembedingten Wechsel der Betriebsart vom konventionellen Modus zum By-wire-Modus (Erholung nach Unterspannung, Fehler-Recovery etc.) zur Anwendung kommen kann.

## Claims

1. Method for operating a motor vehicle brake system of the brake-by-wire type which has:
a) a brake booster (2) which can be activated both by means of an input element (10) which can be connected in a force-transmitting fashion to a brake pedal (5) and by means of an electronic control unit (7), wherein a distance (a) is provided between the brake pedal (5) and the brake booster (2), which distance permits decoupling of a force-transmitting connection between the brake pedal (5) and the brake booster (2) in the brake-by-wire operating mode,
b) a master brake cylinder (3) which is connected downstream of the brake booster (2),
c) means (21) for detecting the activation travel of the brake pedal (5),
d) a pedal travel simulator (6) which interacts with the brake pedal (5) and by means of which a restoring force, which acts on the brake pedal (5) can be simulated in the brake-by-wire operating mode independently of activation of the brake booster (2), and
e) an activation and deactivation device (60) which, in the activated state, activates the pedal travel simulator (6) in the brake-by-wire operating mode when the force-transmitting connection between the brake pedal (5) and the brake booster (2) is decoupled, and switches off said pedal travel simulator (6) in the inactive state outside the brake-by-wire operating mode,
**characterized in that** the travel carried out when the brake pedal (5) is activated is determined and is subsequently reduced by the driver of the vehicle, and **in that**, when the activation travel (s) is decreased by a predefined value (Δs) or in the case of a detected vehicle movement or a positive result of the monitoring function, running in the background, of the activation and deactivation device (60), the activation and deactivation device (60) is activated and the brake booster (2) is actuated by the electronic control unit (7).

2. Method according to Claim 1, **characterized in that** the activation and deactivation device (60) has a hydraulic cylinder-piston arrangement (51) and a pressure-medium-volume-recording element (56), wherein the piston (52) of the cylinder-piston arrangement (51), on which a housing (61) of the pedal travel simulator (6) is supported, bounds a pressure space (53) which can be connected to the pressure-medium-volume-recording element (56) via a connection (54) which can be shutoff by means of a check valve (55), and **in that** the activation of the activation and deactivation device (60) is carried out by switching the check valve (55) into its closed switched position.

3. Method according to Claim 1 or 2, **characterized in that** the setpoint value (P_{Setp}) of the hydraulic pressure (p) which is applied to the master brake cylinder (3) by the actuation of the brake booster (2) is obtained from a characteristic curve (P_{Setp} = f(s)) which assigns a pressure value (p) to an activation travel (s) of the brake pedal (5) and which is shifted by a value (s_{shift}) with respect to a nominal characteristic curve (p = f(s)) and/or is scaled in a suitable way in accordance with the value (s_{shift}), which value (s_{shift}) corresponds to the smallest activation travel (s₀) since the activation of the activation and deactivation device (60) and the actuation of the brake booster (2) minus a correction value (s_{corr}).

4. Method according to Claim 3, **characterized in that** the nominal characteristic curve (P_{Setp} = f(s)) represents the relationship between the activation travel (s) of the brake pedal (5) and the setpoint value of the pressure applied to the master brake cylinder (3).

5. Method according to Claim 3 or 4, **characterized in that** the correction value (s_{corr}) is dependent on the smallest activation travel (s₀) since the activation of the activation and deactivation device (60) and the actuation of the brake booster (2).

6. Method according to Claim 5, **characterized in that** switching over can be carried out between a plurality of characteristic curves (s_{corr}) as a function of the driving situation.

7. Method according to Claim 5 or 6, **characterized in that** the correction value (s_{corr}) is stored in the form of a characteristic curve in the electronic control unit (7).

8. Method according to one of Claims 1 to 7, **characterized in that** the method can be used whenever there is a system-induced changeover of the operating mode from the conventional mode to the by-wire mode (recovery after under voltage, fault recovery etc.).

## Revendications

1. Procédé d'actionnement de l'installation de freinage d'un véhicule automobile, du type "freinage par commande électronique" qui présente :
a) un amplificateur (2) de force de freinage qui peut être actionné aussi bien au moyen d'un organe d'entrée (10) qui peut être amené en liaison de transfert de force avec une pédale de frein (5) qu'au moyen d'une unité électronique de commande (7), une distance (a) qui, dans le mode de fonctionnement "freinage par commande électronique", permet de découpler la liaison de transfert de force entre la pédale de frein (5) et l'amplificateur (2) de force de freinage étant prévue entre la pédale de frein (5) et l'amplificateur (2) de force de freinage,
b) un cylindre principal de freinage (3) raccordé en aval de l'amplificateur (2) de force de freinage,
c) des moyens (21) qui détectent la course d'actionnement de la pédale de frein (5),
d) un simulateur (6) de course de pédale qui coopère avec la pédale de frein (5) et par lequel une force de rappel qui agit sur la pédale de frein (5) peut être simulée indépendamment de l'activation de l'amplificateur (2) de force de freinage en mode de fonctionnement "freinage par commande électronique", et
e) un dispositif (60) de branchement et de débranchement qui, à l'état activé, branche le simulateur (6) de course de pédale en mode de fonctionnement "freinage par commande électronique" lors du désaccouplement de la liaison de transfert de force entre la pédale de frein (5) et l'amplificateur (2) de force de freinage et à l'état désactivé le débranche hors du mode de fonctionnement "freinage par commande électronique",
**caractérisé en ce que**
la course parcourue par la pédale de frein (5) lors de son actionnement est déterminée et est ensuite réduite par le conducteur du véhicule,
**en ce que** lors d'une diminution de la course d'actionnement (s) d'une valeur (Δs) prédéterminée, lorsqu'un déplacement du véhicule a été détecté ou lorsqu'une fonction de surveillance du dispositif (60) de branchement et de débranchement qui est exécuté en arrière-plan donne un résultat positif le dispositif (60) de branchement et de débranchement est activé l'amplificateur (2) de force de freinage est commandé par l'unité électronique de commande (7).

2. Procédé selon la revendication 1, **caractérisé en ce que** le dispositif (60) de branchement et de débranchement présente un système hydraulique (51) à cylindre et piston ainsi qu'un élément (56) de reprise du volume de fluide sous pression, le piston (52) du système hydraulique (51) à cylindre et piston sur lequel s'appuie un boîtier (61) du simulateur (6) de course de pédale délimite un espace sous pression (53) qui peut être relié à l'élément (56) de reprise du volume de fluide sous pression par une liaison (54) qui peut être bloquée au moyen d'une soupape de blocage (55) et du dispositif (60) de branchement et de débranchement s'effectue par commutation de la soupape de blocage (55) dans sa position fermée de commutation.

3. Procédé selon les revendications 1 ou 2, **caractérisé en ce que** la valeur de consigne (Pₛₒₗₗ) de la pression hydraulique (p) commandée par la commande de l'amplificateur (2) de force de freinage dans le cylindre principal de freinage (3) est reprise sur une ligne caractéristique (Pₛₒₗₗ = f(s)) qui associe une valeur de pression (p) à une course d'actionnement (s) de la pédale de frein (5) et qui est décalée d'une valeur (s_{shift}) par rapport à une ligne caractéristique nominale (p = f(s)) et/ou est mise à l'échelle appropriée par application de la valeur (s_{shift}) qui correspond à la plus petite course d'actionnement (s₀) depuis l'activation du dispositif (60) de branchement et de débranchement et la commande de l'amplificateur (2) de force de freinage, après déduction d'une valeur de correction (s_{corr}).

4. Procédé selon la revendication 3, **caractérisé en ce que** la ligne caractéristique nominale (Pₛₒₗₗ = f(s)) représente la relation entre la course d'actionnement (s) de la pédale de frein (5) et la valeur de consigne de la pression établie dans le cylindre principal de freinage (3).

5. Procédé selon les revendications 3 ou 4, **caractérisé en ce que** la valeur de correction (s_{corr}) dépend de la plus petite course d'actionnement (s₀) depuis l'activation du dispositif (60) de branchement et de débranchement et la commande de l'amplificateur (2) de force de freinage.

6. Procédé selon la revendication 5, **caractérisé en ce qu'**il permet de basculer entre plusieurs lignes caractéristiques (s_{corr}) en fonction de la situation de roulage.

7. Procédé selon les revendications 5 ou 6, **caractérisé en ce que** la valeur de correction (s_{corr}) est conservée dans l'unité électronique de commande (7) sous la forme d'une ligne caractéristique.

8. Procédé selon l'une des revendications 1 à 7, **caractérisé en ce que** le procédé peut être appliqué lors de chaque changement du mode de fonctionnement entre le mode classique et le mode par commande électronique (répétition après détente, récupération après défaut, etc.) imposé par le système.
